# EUROPÄISCHE PATENTANMELDUNG

(11) **EP 2 256 431 A1**
(43) Veröffentlichungstag der Anmeldung: **01.12.2010**
(21) Anmeldenummer: 09006791.9
(22) Anmeldetag: 20.05.2009
(51) Int. Cl.: F24J 2/52, H01L 31/042

(54) **Photovoltaik-Solaraggregat**

(71) Anmelder: Enpaco GmbH, 8634 Hombrechtikon (CH)
(72) Erfinder: Mebes, Reto, 8634 Hombrechtikon (CH)
(74) Vertreter: Rohmann, Michael

(57) **Zusammenfassung**

Photovoltaik-Solaraggregat, insbesondere zur Auflage und Befestigung an Dächern, mit zumindest einem Dünnschicht-Solarmodul und einem flexiblen Netz. Das Dünnschicht-Solarmodul ist an dem Netz befestigt und das Netz ist an einer Tragkonstruktion fixierbar.

## Beschreibung

Die Erfindung betrifft ein Photovoltaik-Solaraggregat, insbesondere zur Auflage und Befestigung an Dächern. Ein solches Photovoltaik-Solaraggregat weist Photovoltaik-Solarzellen bzw. Photovoltaik-Solarmodule auf, die Sonnenlicht bzw. Strahlungsenergie in elektrische Energie umwandeln.

Photovoltaik-Solarmodule sind aus der Praxis in verschiedenen Ausführungsformen bekannt. Diese bekannten Solarmodule zeichnen sich durch den Nachteil aus, dass sie nur sehr aufwendig montierbar sind und im Bedarfsfall auch entsprechend aufwendig wieder demontierbar sind. Im Übrigen weisen bekannte Aggregate aus Solarmodulen ein relativ hohes Gewicht auf, so dass insbesondere ihre Befestigung an Leichtbaudächem problematisch ist. Weiterhin lassen die bekannten Lösungen im Hinblick auf Variabilität und Flexibilität zu wünschen übrig. Das gilt insbesondere auch für das äußere Erscheinungsbild von bekannten Solarmodulen bzw. bekannten Aggregaten von Solarmodulen.

Demgegenüber liegt der Erfindung das technische Problem zugrunde, ein Photovoltaik-Solaraggregat anzugeben bei dem die vorstehend genannten Nachteile effektiv vermieden werden können.

Zur Lösung dieses technischen Problems lehrt die Erfindung ein Photovoltaik-Solaraggregat, insbesondere zur Auflage und Befestigung an Dächern, mit zumindest einem Dünnschicht-Solarmodul, vorzugsweise mit einer Mehrzahl von Dünnschicht-Solarmodulen und einem flexiblen Netz, wobei das Dünnschicht-Solarmodul bzw. die Dünnschicht-Solarmodule an dem Netz befestigt ist/sind und wobei das Netz an einer Tragkonstruktion fixierbar ist. Tragkonstruktionen meint insbesondere ein Dach, beispielsweise ein Leichtbaudach. Grundsätzlich kann das Netz bzw. das Photovoltaik-Solaraggregat aber auch unabhängig von einem Dach frei an einer entsprechenden Tragkonstruktion aufgespannt werden.

Dünnschicht-Solarmodul meint im Rahmen der Erfindung ein dünnes bzw. dünnschichtiges Photovoltaik-Solarmodul mit einer Mehrzahl von Solarzellen bzw. photovoltaischen Zellen, die Sonnenlicht bzw. Strahlungsenergie in elektrische Energie umwandeln. Zweckmäßigerweise weist ein im Rahmen der Erfindung eingesetztes Dünnschicht-Solarmodul zumindest teilweise bzw. zumindest größtenteils Solarzellen auf Basis von kristallinem Silicium auf. Prinzipiell können auch Solarzellen auf Basis von amorphem Silicium eingesetzt werden. Ein erfindungsgemäß eingesetztes Dünnschicht-Solarmodul weist eine Mehrzahl von Solarzellen auf, die zweckmäßigerweise auf einer Trägerschicht bzw. Trägerfolie aufgebracht sind. Empfohlenermaßen ist über den Solarzellen eine transparente Abdeckungsschicht vorgesehen. Vorzugsweise handelt es sich hier um eine Abdeckungsschicht mit einer selbstreinigenden Oberfläche. Es liegt im Rahmen der Erfindung, dass bei dem erfindungsgemäßen Photovoltaik-Solaraggregat eine Mehrzahl von Dünnschicht-Solarmodulen auf dem flexiblen Netz befestigt ist.

Empfohlenermaßen weist ein erfindungsgemäß eingesetztes Dünnschicht-Solarmodul eine Dicke von 1 bis 5 mm vorzugsweise von 1,5 bis 4 mm und bevorzugt von 1,5 bis 3,5 mm auf. Besonders bewährt hat sich eine Dicke von 2 bis 3 mm für die verwendeten Dünnschicht-Solarmodule. - Zweckmäßigerweise weist ein im Rahmen der Erfindung eingesetztes Dünnschicht-Solarmodul eine Breite von 2 cm bis 4 m, vorzugsweise von 5 cm bis 3 m und bevorzugt von 10 cm bis 2 m auf. Empfohlenermaßen weist ein erfindungsgemäß eingesetztes Dünnschicht-Solarmodul eine Länge von 1 m bis 40 m, vorzugsweise von 1 m bis 20 m und bevorzugt eine Länge von 2 m bis 10 m auf. Es liegt im Rahmen der Erfindung, dass die verwendeten Dünnschicht-Solarmodule flexible bzw. biegbare Dünnschicht-Solarmodule sind. Die Dünnschicht-Solarmodule sind insbesondere mit einem Biegungswinkel von mind. 45° ohne Bruch biegbar. Der Wirkungsgrad der erfindungsgemäß eingesetzten Dünnschicht-Solarmodule beträgt zweckmäßigerweise mindestens 8 %.

Das erfindungsgemäß verwendete Netz bzw. Netztuch wird aus sich kreuzenden Netzelementen bzw. flexiblen Netzelementen gebildet. Bei den Netzelementen handelt es sich insbesondere um Seile, Stränge, Drähte und dergleichen. Nach einer sehr bevorzugten Ausführungsform der Erfindung besteht das Netz bzw. bestehen die sich kreuzenden Netzelemente des Netzes aus Metall bzw. zumindest teilweise aus Metall. Empfohlenermaßen sind die Netzelemente als Drähte bzw. metallische Drähte ausgebildet und ist das Netz somit als Drahtnetz ausgeführt. Nach einer Ausführungsvariante können die Drähte bzw. die metallischen Drähte mit Kunststoff ummantelt sein. Bei den Netzelementen kann es sich im Übrigen auch um Metallseile handeln. Eine weitere bevorzugte Ausführungsform der Erfindung ist **dadurch gekennzeichnet, dass** das Netz bzw. die sich kreuzenden Netzelemente des Netzes aus Kunststoff bzw. im Wesentlichen aus Kunststoff besteht/bestehen. Vorzugsweise besteht das Netz bzw. bestehen die sich kreuzenden Netzelemente aus zumindest einem Polyolefin bzw. im Wesentlichen aus zumindest einem Polyolefin und ganz besonders bevorzugt aus Polyethylen bzw. im Wesentlichen aus Polyethylen. Gemäß einer Ausführungsvariante wird das Netz mit Metallseilen, insbesondere mit Stahlseilen armiert. Die Metallseile/Stahlseile können dabei in das Netz integriert sein oder auf dem montierten Netz aufliegen. Die Armierung mit Metallseilen/Stahlseilen empfiehlt sich vor allem bei höheren Windbelastungen um eine ausreichende Windstabilität sicherzustellen. Zweckmäßigerweise sind die zur Armierung vorgesehen Metallseile/Stahlseile in einem Abstand von 2 bis 10m, insbesondere in einem Abstand von 3 bis 8 m, beispielsweise in einem Abstand von 5 m vorgesehen.

Gemäß einer sehr bevorzugten Ausführungsform der Erfindung sind die an das zumindest eine Dünnschicht-Solarmodul bzw. die an die Dünnschicht-Solarmodule angeschlossenen elektrischen Leitungen bzw. Kabel zumindest zum Teil, vorzugsweise vollständig bzw. quasi vollständig in die Netzstruktur integriert. Es versteht sich, dass die elektrischen Leitungen bzw. Kabel zum Transport des elektrischen Stroms dienen, der mit Hilfe der Dünnschicht-Solarmodule aus dem Sonnenlicht bzw. aus der Strahlungsenergie erzeugt wird. Dass die elektrischen Leitungen in die Netzstruktur integriert sind meint im Rahmen der Erfindung insbesondere, dass die elektrischen Leitungen bzw. Kabel an den Netzelementen anliegen und/oder in die Netzelemente integriert sind. Die elektrischen Leitungen können gemäß einer Ausführungsvariante wendelförmig an der Oberfläche der Netzelemente entlanggeführt werden.

Soweit nachfolgend der Begriff Maschen benutzt wird, sind damit ganz allgemein die Öffnungen zwischen den sich kreuzenden Netzelementen gemeint. Es liegt im Rahmen der Erfindung, dass das Netz eine Maschenweite von 1 mm bis 15 cm, vorzugsweise von 1 mm bis 10 cm und bevorzugt von 2 mm bis 7 cm aufweist. Grundsätzlich kann im Rahmen der Erfindung auch ein relativ engmaschiges Gewebe als Netz eingesetzt werden. Gemäß einer Ausführungsform der Erfindung beträgt die Maschenweite des Netzes 2 cm bis 12 cm, vorzugsweise 3 cm bis 11cm. Zweckmäßigerweise wird die Maschenweite je nach Windbelastung ausgewählt. Bei höherer Windbelastung empfiehlt sich eine größere Maschenweite um den Windwiderstand möglichst gering zu halten. Es liegt weiterhin im Rahmen der Erfindung, dass zumindest ein Teil der Maschen des Netzes Freiräume zwischen den sich kreuzenden Netzelementen aufweist. Nach einer Ausführungsform der Erfindung weisen zumindest 5 %, zweckmäßigerweise zumindest 10 % und bevorzugt zumindest 20 % der Maschen des Netzes Freiräume zwischen den sich kreuzenden Netzelementen auf. Vorzugsweise wird ein Teil der Maschen des Netzes mit einer Trägermasse für ein Dünnschicht-Solarmodul bzw. für die Dünnschicht-Solarmodule ausgefüllt. Bei der Trägermasse handelt es sich empfohlenermaßen um einen Kunststoff, beispielsweise um ein Polyolefin oder nach einer Ausführungsform um EPDM (Ethylen-Propylen-Dien-Mischpolymerisat). Die Maschen des erfindungsgemäß eingesetzten Netzes bilden also Freiräume oder können mit einer Trägermasse ausgefüllt sein. Zweckmäßigerweise wird die Anzahl der Freiräume bildenden Maschen in Abhängigkeit von der Windbelastung gewählt. Bei höherer Windbelastung empfiehlt es sich eine höhere Anzahl von Freiräume bildenden Maschen vorzusehen.

Nach einer empfohlenen Ausführungsform ist das zumindest ein Dünnschicht-Solarmodul bzw. sind die Dünnschicht-Solarmodule mittels einer Kiebeverbindung und/oder mittels einer Klettverbindung und/oder mittels einer mechanischen Verbindung an dem Netz befestigt. Eine mechanische Befestigung der Dünnschicht-Solarmodule an dem Netz wird beispielsweise mit Hilfe von Ösen und/oder Haken realisiert. Die Befestigung der Dünnschicht-Solarmodule erfolgt zweckmäßigerweise an den sich kreuzenden Netzelementen bzw. an den Kreuzungspunkten der sich kreuzenden Netzelemente. Empfohlenermaßen beträgt der gegenseitige Abstand der Dünnschicht-Solarmodule auf dem Netz mindestens 5cm, vorzugsweise mindestens 10 cm und bevorzugt mindestens 20 cm. Zweckmäßigerweise beträgt der maximale gegenseitige Abstand der Dünnschicht-Solarmodule 2 m, bevorzugt 1,50 m. Es empfiehlt sich, dass der Abstand der Dünnschicht-Solarmodule in Abhängigkeit von der jeweiligen Windbelastung ausgewählt wird. Bei höherer Windbelastung ist ein größerer gegenseitiger Abstand der Dünnschicht-Solarmodule zweckmäßig.

Gemäß einer Ausführungsform der Erfindung deckt ein auf dem Netz befestigtes Dünnschicht-Solarmodul eine Mehrzahl von Maschen des Netzes ab. Nach einer Ausführungsvariante ist eine Trägerfolie, insbesondere aus Kunststoff in das Netz bzw. auf oder unter dem Netz kaschiert und zumindest ein Dünnschicht-Solarmodul ist an dieser Trägerfolie befestigt. Kaschiert meint hier insbesondere, dass die Maschen des Netzes in die Trägerfolie integriert sind. Es ist auch möglich, dass eine Trägerfolie lediglich innerhalb einer Masche angeordnet ist. Gemäß einer bevorzugten Ausführungsform der Erfindung besteht die Trägerfolie aus EPDM bzw. im Wesentlichen aus EPDM.

Eine sehr bevorzugte Ausführungsform der Erfindung ist **dadurch gekennzeichnet, dass** eine Trägerfolie an der Unterseite des Netzes befestigt ist und dass eine Trägerfolie an der Oberseite des Netzes befestigt ist, so dass das Netz sandwichartig zwischen den beiden Trägerfolien angeordnet ist. Bei dieser Ausführungsform ist das Netz bevorzugt als Drahtnetz aus metallischen Drähten ausgebildet. Die an der Unterseite und/oder die an der Oberseite des Netzes bzw. Drahtnetzes befestigte Trägerfolie besteht vorzugsweise aus Kunststoff bzw. im Wesentlichen aus Kunststoff und bevorzugt aus EPDM bzw. im Wesentlichen aus EPDM. Es liegt im Rahmen der Erfindung, dass zumindest ein Dünnschicht-Solarmodul an der an der Oberseite des Netzes befestigten Trägerfolie fixiert ist und empfohlenermaßen zur Fixierung angeklebt ist.

Zweckmäßigerweise sind im Randbereich bzw. sind an den Rändern des Netzes Fixierungselemente für die Fixierung an der Tragkonstruktion vorgesehen. Bei der Tragkonstruktion handelt es sich vorzugsweise um ein Dach, beispielsweise ein Leichtbaudach und das Netz wird dann mit den im Randbereich angeordneten Fixierungselementen an dem Dach bzw. Leichtbaudach fixiert. Bei den Fixierungselementen handelt es sich insbesondere um Haken und/oder Ringe und/oder Schlaufen und/oder Ösen und/oder Seile. Es liegt im Rahmen der Erfindung, dass die Fixierungselemente leicht demontierbare bzw. leicht lösbare Fixierungselemente sind.

Die Struktur des Netzes ist im Rahmen der Erfindung grundsätzlich frei wählbar. Nach eine empfohlenen Ausführungsform weist das Netz rechteckige und insbesondere quadratische Maschen auf. Es ist darauf hinzuweisen, dass die Farbe des Netzes frei wählbar bzw. variierbar ist. Insoweit kann das äußere Erscheinungsbild des erfindungsgemäßen Photovoltaik-Solaraggregates problemlos an die Umgebung bzw. an die Tragkonstruktion angepasst werden.

Nach einer Ausführungsform der Erfindung werden für die Dünnschicht-Solarmodule bzw. für die Solarzellen der Dünnschicht-Solarmodule Siliciumkristalle eingesetzt, die im Ziehverfahren hergestellt werden. Bei den im Rahmen der Erfindung eingesetzten Solarzellen handelt es sich insbesondere um multikristalline Siliciumzellen. Grundsätzlich können auch monokristalline Siliciumzellen eingesetzt werden. Nach einer besonders bevorzugten Ausführungsform werden sphärische Silicium-Solarzellen für die Dünnschicht-Solarmodule verwendet.

Der Erfindung liegt die Erkenntnis zugrunde, dass ein erfindungsgemäßes Photovoltaik-Solaraggregat auf sehr einfache und wenig aufwendige Weise montiert werden kann. Bei Bedarf ist auch eine Demontage problemlos und ohne großen Aufwand möglich. Das erfindungsgemäße Photovoltaik-Solaraggregat kann auf einfache und problemlose Weise an den verschiedensten Tragkonstruktionen, insbesondere Dächern befestigt werden und auch an die verschiedensten Tragkonstruktionen angepasst werden. Fernerhin zeichnet sich das erfindungsgemäße Photovoltaik-Solaraggregat durch ein geringes Gewicht aus und von daher eignet es sich insbesondere für die Befestigung an leichten Tragkonstruktionen bzw. an Leichtbaudächern. Im Hinblick auf das äußere Erscheinungsbild zeichnet sich das erfindungsgemäße Photovoltaik-Solaraggregat durch Variabilität und Flexibilität aus. Insbesondere die Farben des Netzes sind frei wählbar und können daher problemlos an die Umgebung bzw. an die Tragkonstruktion angepasst werden. Aufgrund der flexiblen Ausgestaltung des erfindungsgemäßen Photovoltaik-Solaraggregates kann es auf einfache Weise an die verschiedensten Formen der Tragkonstruktionen bzw. Dächer angepasst werden. Da das Solaraggregat so ausgestaltet werden kann, dass es lediglich einen geringen Windwiderstand bietet, kann es insbesondere auch an Orten mit einer hohen Windbelastung eingesetzt werden. Hervorzuheben ist weiterhin, dass das erfindungsgemäße Photovoltaik-Solaraggregat mit relativ geringen Kosten realisiert werden kann. Ein weiterer Vorteil der Erfindung ist darin zu sehen, dass das erfindungsgemäße Photovoltaik-Solaraggregat mit der Maßgabe ausgebildet werden kann, dass es lediglich an den Rändern des Netzes befestigt wird. Somit sind in vorteilhafter Weise keine weiteren aufwendigen Befestigungen bzw. Dachbefestigungen erforderlich. Aufgrund der Flexibilität der erfindungsgemäßen Photovoltaik-Solaraggregate bzw. der Netze und Dünnschicht-Solarmodule können die Aggregate insbesondere auch im aufgerollten Zustand in platzsparender Weise gelagert und transportiert werden. Die Aggregate können dann später am Montageort einfach ausgerollt und montiert werden.

Nachfolgend wird die Erfindung anhand einer lediglich ein Ausführungsbeispiel darstellenden Zeichnung näher erläutert,

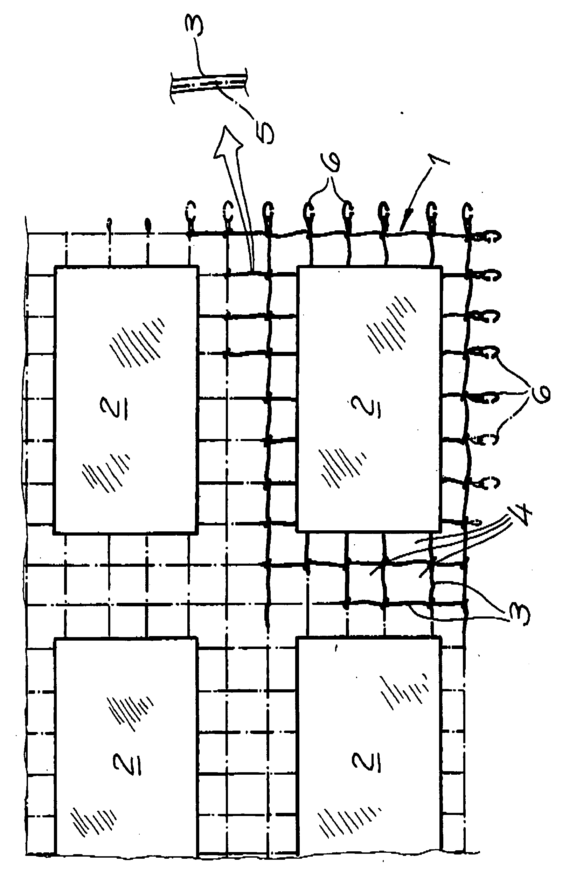

Die einzige Figur zeigt eine Draufsicht auf ein erfindungsgemäßes Photovoltaik-Solaraggregat, das insbesondere für die Befestigung an Dächern und vorzugsweise an Leichtbaudächem vorgesehen ist. Das Photovoltaik-Solaraggregat weist ein flexibles Netz 1 auf, an dem bzw. auf dem eine Mehrzahl von Dünnschicht-Solarmodulen 2 befestigt ist. Die Dünnschicht-Solarmodule 2 weisen jeweils in nicht näher dargestellter Weise eine Mehrzahl von Solarzellen bzw. photovoltaischen Zellen auf, die Sonnenlicht bzw. Strahlungsenergie in elektrische Energie bzw. in elektrischen Strom umwandeln. Das Netz 1 bzw. das Netztuch wird aus sich kreuzenden flexiblen Netzelementen 3 gebildet. Diese Netzelemente 3 mögen vorzugsweise und im Ausführungsbeispiel aus metallischen Drähten bestehen. Die sich kreuzenden Netzelemente 3 bilden Maschen 4 aus, die im Ausführungsbeispiel teilweise von den auf dem Netz 1 befestigten Dünnschicht-Solarmodulen 2 abgedeckt werden. Die Maschenweite mag im Ausführungsbeispiel 5 cm betragen. Vorzugsweise und im Ausführungsbeispiel sind die an die Dünnschicht-Solarmodule 2 angeschlossenen elektrischen Leitungen 5 in die Netzstruktur integriert. Die elektrischen Leitungen 5 sind dabei vorzugsweise an den sich kreuzenden Netzelementen 3 angeordnet. Das ist in der Zeichnung an einer Stelle angedeutet worden. Im Ausführungsbeispiel mögen die Dünnschicht-Solarmodule 2 über eine Klebeverbindung an dem Netz 1 befestigt sein. Es liegt im Rahmen der Erfindung, dass die Dünnschicht-Solarmodule 2 an einer in der Figur nicht dargestellten an dem Netz befestigten Trägerfolie fixiert sind.

An den Rändern des Netzes 1 sind im Ausführungsbeispiel als Befestigungshaken 6 ausgebildete Fixierungselemente für die Fixierung an einer Tragkonstruktion, insbesondere an einem Dach vorgesehen. Von Vorteil ist im Rahmen der Erfindung, dass das erfindungsgemäße Photovoltaik-Solaraggregat lediglich an seinen Rändern beispielsweise an einem Dachrand befestigt werden muss und grundsätzlich auf weitere Befestigungselemente bzw. Befestigungspositionen verzichtet werden kann. Dazu trägt im Rahmen der Erfindung auch bei, dass das erfindungsgemäße Photovoltaik-Solaraggregat so ausgebildet werden kann, dass es lediglich einen geringen Windwiderstand bietet. Daher kann das erfindungsgemäße Solaraggregat auch an Orten mit hoher Windbelastung eingesetzt werden und auch dort lediglich an den genannten bevorzugten Befestigungspositionen befestigt werden.

## Patentansprüche

1. Photovoltaik-Solaraggregat, insbesondere zur Auflage und Befestigung an Dächern, mit zumindest einem Dünnschicht-Solarmodul (2), vorzugsweise mit einer Mehrzahl von Dünnschicht-Solarmodulen (2) und einem flexiblen Netz (1), wobei das Dünnschicht-Solarmodul (2) bzw. die Dünnschicht-Solarmodule (2) an dem Netz befestigt ist/sind und wobei das Netz an einer Tragkonstruktion fixierbar ist.

2. Photovoltaik-Solaraggregat nach Anspruch 1, wobei das Dünnschicht-Solarmodul (2) Solarzellen auf Basis von kristallinem Silicium aufweist.

3. Photovoltaik-Solaraggregat nach einem der Ansprüche 1 oder 2, wobei das Dünnschicht-Solarmodul (2) eine Dicke von 1 bis 5 mm, vorzugsweise von 1,5 bis 4 mm und bevorzugt von 1,5 bis 3,5 mm aufweist.

4. Photovoltaik-Solaraggregat nach einem der Ansprüche 1 bis 3, wobei das Dünnschicht-Solarmodul (2) eine Breite von 2 cm bis 4 m, vorzugsweise von 5 cm bis 3 m und bevorzugt von 10 cm bis 2 m aufweist und wobei das Dünnschicht-Solarmodul (2) eine Länge von 1 m bis 40 m, vorzugsweise von 1 m bis 20 m und bevorzugt eine Länge von 2 m bis 10 m aufweist.

5. Photovoltaik-Solaraggregat nach einem der Ansprüche 1 bis 4, wobei das Netz (1) bzw. die sich kreuzenden Netzelemente (3) des Netzes (1) aus Kunststoff bzw. im Wesentlichen aus Kunststoff und vorzugsweise aus zumindest einem Polyolefin bzw. im Wesentlichen aus zumindest einem Polyolefin besteht/bestehen.

6. Photovoltaik-Solaraggregat nach einem der Ansprüche 1 bis 5, wobei das Netz (1) bzw. die sich kreuzenden Netzelemente (3) des Netzes (1) aus Metall bzw. zumindest teilweise aus Metall besteht/bestehen und wobei die sich kreuzenden Netzelemente vorzugsweise als metallische Drähte ausgebildet sind.

7. Photovoltaik-Solaraggregat nach einem der Ansprüche 1 bis 6, wobei die an das zumindest eine Dünnschicht-Solarmodul (2) bzw. die an die Dünnschicht-Solarmodule (2) angeschlossenen elektrischen Leitungen (5) zumindest zum Teil in die Netzstruktur integriert sind.

8. Photovoltaik-Solaraggregat nach einem der Ansprüche 1 bis 7, wobei das Netz (1) eine Maschenweite von 1 mm bis 15 cm, vorzugsweise von 1 mm bis 10 cm und bevorzugt von 2 mm bis 7 cm aufweist.

9. Photovoltaik-Solaraggregat nach einem der Ansprüche 1 bis 8, wobei zumindest ein Teil der Maschen (4) des Netzes (1) Freiräume zwischen den sich kreuzenden Netzelementen (3) aufweist und wobei gegebenenfalls ein Teil der Maschen (4) des Netzes (1) mit einer Trägermasse für ein Dünnschicht-Solarmodul (2) ausgefüllt ist.

10. Photovoltaik-solaraggregat nach einem der Ansprüche 1 bis 9, wobei das zumindest eine Dünnschicht-Solarmodul (2) bzw. die Dünnschicht-Solarmodule (2) mittels Klebeverbindung und/oder mittels Klettverbindung und/oder mittels mechanischer Verbindung an dem Netz befestigt ist/sind.

11. Photovoltaik-Solaraggregat nach einem der Ansprüche 1 bis 10, wobei der gegenseitige Abstand der Dünnschicht-Solarmodule (2) auf dem Netz mindestens 5 cm, vorzugsweise mindestens 10 cm und bevorzugt mindestens 20 cm beträgt.

12. Photovoltaik-Solaraggregat nach einem der Ansprüche 1 bis 11, wobei ein auf dem Netz (1) befestigtes Dünnschicht-Solarmodul (2) eine Mehrzahl von Maschen (4) des Netzes (1) abdeckt.

13. Photovoltaik-Solaraggregat nach einem der Ansprüche 1 bis 12, wobei zumindest eine Trägerfolie, insbesondere aus Kunststoff, in das Netz bzw. auf oder unter dem Netz kaschiert ist und zumindest ein Dünnschicht-Solarmodul (2) an der Trägerfolie befestigt ist.

14. Photovoltaik-Solaraggregat nach einem der Ansprüche 1 bis 13, wobei im Randbereich bzw. an den Rändern des Netzes (1) Fixierungselemente für die Fixierung an der Tragkonstruktion vorgesehen sind.

15. Photovoltaik-Solaraggregat nach Anspruch 14, wobei die Fixierungselemente demontierbare bzw. lösbare Fixierungselemente sind.

## Geänderte Patentansprüche

### Geänderte Patentansprüche gemäss Regel 137(2) EPÜ.

**1.** Photovoltaik-Solaraggregat, insbesondere zur Auflage und Befestigung an Dächern, mit zumindest einem Dünnschicht-Solarmodul (2), vorzugsweise mit einer Mehrzahl von Dünnschicht-Solarmodulen (2) und einem flexiblen Netz (1), wobei das Netz an einer Tragkonstruktion fixierbar ist,
wobei das Dünnschicht-Solarmodul (2) bzw. die Dünnschicht-Solarmodule (2) an dem Netz befestigt ist/sind und
wobei ein Teil der Maschen (4) des Netzes (1) mit einer Trägermasse für ein Dünnschicht-Solarmodul (2) bzw. für die Dünnschicht-Solarmodule (2) ausgefüllt ist.
